# EUROPEAN PATENT SPECIFICATION

(11) **EP 1 465 482 B1**
(45) Date of publication and mention of the grant of the patent: **16.04.2008**
(21) Application number: 03702068.2
(22) Date of filing: 13.01.2003
(51) Int. Cl.: A01M 23/38, A01M 23/04

(54) **ANIMAL TRAP**
TIERFALLE
PIEGE POUR ANIMAUX

(30) Priority: 14.01.2002 US 43161; 17.12.2002 US 320688
(43) Date of publication of application: 13.10.2004
(73) Proprietor: WOODSTREAM CORPORATION, Lititz, PA 17543-0327 (US); Anderson, David L., Lititz, PA 17543 (US); Gehret, Michael J., Lititz, PA 17543 (US)
(72) Inventor: ANDERSON, David, L., Lititz, PA 17543 (US); GEHRET, Michael, J., Lititz, PA 17543 (US); SWIFT, David, W., Lititz, PA 17543 (US); RICH, Christopher, T., Leola, PA 17540 (US)
(74) Representative: Sundien, Thomas
(86) International application number: PCT/US2003/000858
(87) International publication number: WO 2003/059057

(56) References cited:
- FR-A- 893 117
- US-A- 3 197 916
- US-A- 5 269 091
- US-A- 5 369 907

## Description

### BACKGROUND OF THE INVENTION

### Field of the Invention

This invention relates to electric or electronic animal traps, and relates more particularly to an animal trap adapted to catch and electrocute a targeted animal simultaneously stepping on a pair of spaced electrodes, with means designed to direct a targeted animal entering the trap housing into and through a pathway leading to a source of bait beyond the electrodes while minimizing the likelihood that the animal will back out or escape from the trap before engaging the electrodes, and while precluding accidental contact with the electrodes by a user, a pet or non-targeted animal that could inadvertently fire the trap.

Although the concepts of the instant invention are equally applicable to traps for animals of any size, devices of this type are primarily utilized in connection with the trapping of rodents such as mice and rats and the description will, therefore, focus on this application.

### The Prior Art

Animal traps have been around for hundreds of years and include many different designs. Most common is the typical rodent snap trap that utilizes a spring and a snapping bar to kill the target animal. These designs can be unpleasant to handle and pose a danger to the consumer setting the trap.

Due to these problems, many other types of animal traps, particularly rodent traps, have been utilized. One alternative to the snap trap is to use electricity to kill the target animal. Traps of this nature are typically easier to set and do not produce an unsightly result when the consumer catches a rodent or the like. However, other issues such as safety and efficacy can be a concern. Professional pest control companies have complained of possible dangers in using such traps; additionally, it is not uncommon for target animals to avoid electrocution by backing out of the trap. Attempts to avoid these problems have been less than successful.

In U.S. Pat. No. 5,269,091 to Johnson et al., a flexible plate is charged with a base plate. When the pest enters the trap, the pest presses the flexible plate into contact with the base plate. This contact completes the circuit and a high voltage is applied to the pest. The problem with this type of device is that voltage only occurs when the pest makes contact with the flexible plate. When the pest is initially shocked it may move and fail to receive sufficient voltage to exterminate it.

Johnson et at. U.S. Pat. No. 5,949,636 discloses a portable pest electrocution device with a resistive switch to sense the presence of a pest between a pair of electrodes. One of the electrodes is set at a high voltage and the other is set to ground. The ground electrode is a separate stake shaped electrode which is placed physically in the ground. When the pest enters the trap, contact is made, and a timer begins for a set period of time. After timing out, the timer deactivates the power to the electrodes. A problem with this device is that a separate ground stake is necessary. It is costly and cumbersome. If the user forgets or misplaces the separate ground stake, the device does not work correctly and thus will be useless.

In U.S. Patent No. 3,197,916 to Cole, Jr. et al., an electric animal trap is disclosed having a housing, entrance opening, pathway, first and second electrodes and electrical circuitry that activates the electrodes. As the pest enters the housing, there is nothing to direct the path the pest will take and nothing to obstruct the pest's view of the full interior of the housing. In addition, the trap does not deliver an alternating current until the pest has completely entered the trap and the door has fully closed behind it. This construction provides nothing to pique the pest's curiosity while also giving the pest an extended opportunity to escape.

Many of the problems associated with the Johnson et al. patented products or other prior art electrical or electronic animal traps are overcome by providing an electric or electronic trap of the inclined plane or teeter-totter type wherein the target animal entering the trap passes over the fulcrum of a tilting floor or platform and closes a circuit initiating an electrical shock to kill the animal. However, while effective, tilting floor traps require significant design features to insure the targeted animal does not escape before it engages the electrodes and to preclude accidental engagement with the electrodes by a less sophisticated or curious person such as a young child.

Inclined plane animal traps have been available for over one hundred years. The commercial embodiments of such traps currently available, such as that described in U.S. Patent No. 6,622,422, include a housing defining an enlarged enclosure with one, or perhaps two, inclined plane trap assemblies communicating the interior of the enclosure with the exterior of the housing via an elongated passageway. An inclined plane tilting floor member is positioned in the passageway of each trap assembly and is adapted to lift a door to block an entrance opening when the rodent passes beyond a pivot point thereby limiting escape from the enclosure. When the rodent exits the passageway into the enclosure, the door falls by gravity on the entrance end of the tilting floor to reset the trap and the raised end of the tilting floor limits the ability of a captured rodent to return to the passageway.

An electric or electronic animal trap, whether of the inclined plane type or not, having means to discourage a target animal from escaping after entering the housing, or freeing itself before adequate electrical charge is applied for electrocution, would be highly desirable, particularly if it had limited moving parts and was protected against accidental injury to even inexperienced users.

### SUMMARY OF THE INVENTION

A primary object of this invention is to provide an animal trap, particularly a mouse or rat trap, which will quickly and efficiently electrocute a targeted animal, is simple and inexpensive to manufacture and highly reliable and completely safe in use.

An important object of this invention is to provide an electric or electronic animal trap of the inclined plane type which has a door which closes mechanically as the circuit completes thus reducing the chances that children, pets or non-target species can inadvertently fire the trap and potentially cause harm to themselves. Such a construction also creates a situation where there is only one possible outcome once a targeted animal enters the trap. Since the animal can not back out of the trap, it will complete the circuit resulting in its death.

A further object of this invention is to provide a unique inclined plane electric animal trap incorporating features that render the same essentially escape-proof because, for all practical purposes, once the animal steps into the trap, the inclined plane will tip and the animal will be electrocuted.

It is another object of the invention to provide an electric or electronic animal trap including a housing with a bottom wall, upstanding peripheral walls and a cover, together defining an enclosure for holding the targeted animal, with contacts on portions of the peripheral walls and cover adapted to open or "break" the circuitry when the cover is lifted, thereby avoiding accidental injury to a person contacting the electrodes when accessing the enclosure to add bait or to remove electrocuted animals.

A still further object of this invention is the provision of an inclined plane electric or electronic animal trap having unique circuitry and including, in a preferred embodiment, a diverter plate or the like making it difficult for an animal stepping from an electrified platform which functions as a first electrode to reverse direction as it contacts the second electrode at the end of the platform.

Another object of this invention is to provide an electric or electronic animal trap which, in some of its embodiments, eliminates the sometimes problematic operation and effectiveness of the inclined plane or tilting floor animal trap construction altogether and replaces the same with a fixed barrier or diverter system that has no moving parts and, while minimizing or preventing escape of the animal, totally precludes the accidental simultaneous engagement of the electrodes and actuation of the circuitry by blocking the pathway between the entrance opening and at least the second electrode to preclude the introduction of an extraneous element by an inexperienced or curious user.

Yet another object of this invention is to provide a mouse or rat trap comprising at least a pair of spaced, oppositely angled, barrier elements immediately within the entrance opening, diverting a target animal into a maze-like path as it passes into the trap because of its innate curiosity or to seek a quantity of bait, such as peanut butter or the like, positioned beyond the electrodes. Once the animal passes the first barrier, it no longer sees the opening and is encouraged to simply move forward, rather than to attempt to back out or escape from the trap before engaging and actuating the electronic circuitry. The same barrier system that minimizes the likelihood of escape of the target animal also bars the entry of a relatively straight element such as screwdriver or a child's finger that could accidentally close die circuit and injure the trap user and/or damage the trap.

A further object of this invention is to provide a trap of the type described either with the angled diverters or the inclined plane, but incorporating a plate or the like extending downwardly from the housing cover intermediate the spaced electrodes that provides limited space between its lower edge and the floor of the housing to force a target animal to squeeze thereunder making it more difficult for the animal to reverse itself when it contacts the second electrode.

A still further object of this invention is to incorporate a pair of cooperating diverters or barriers, one extending partway down to the floor from the cover and the other extending partway up from the floor toward the cover which together block direct access to the electrodes by a straight element inserted through the entrance opening.

From the foregoing, it is obvious that the instant invention provides an electric or electronic animal trap which, in all embodiments, is highly efficient and reliable, providing excellent protection against inadvertent or accidental damage to the user of the trap or the trap itself.

Other and further objects of this invention will be readily understood by those with ordinary skill in the art with particular reference to the following detailed description of the preferred embodiments in combination with the accompanying drawings.

### BRIEF DESCRIPTION OF THE DRAWINGS

The combination of elements, arrangement of parts and features of construction that lead to the inventive animal trap of the instant invention will be pointed out in more detail hereinafter with respect to the accompanying drawings wherein:
Figure 1 is a fragmentary longitudinal cross-sectional view through a prior art embodiment of an inclined plane trap assembly in a repeating rodent trap, with the pivotal floor and door members shown in dotted lines in their alternate position;
Figure 2 is an exploded perspective view of one embodiment of an electronic animal trap;
Figure 3 is a fragmentary longitudinal cross-sectional view of the electronic animal trap of Figure 2 with the battery and electronic circuit shown in dotted lines with a partial wire and ground plate shown;
Figure 4 is a fragmentary longitudinal cross-sectional view of the electronic animal trap of Figure 2 with the floor and door members shown in dotted lines prior to entry of a target animal and in solid lines as the animal passes over the pivot point;
Figure 5 is a fragmentary perspective view into the trap assembly of Figure 2 from the back wall;
Figure 6 is a block diagram electronic circuit for an animal trap;
Figure 7 is a detailed schematic illustration of a preferred electronic circuit for an animal trap;
Figure 8 is an exploded view of a general housing design for the various embodiments of trap assemblies according to this invention;
Figure 9 is a top plan view of the base of one preferred embodiment of an animal trap according to the instant inventive concepts with the cover and electronic components removed for illustrative clarity;
Figure 10 is a perspective view of the trap housing base of the embodiment of Figure 9;
Figure 11 is a perspective view of the trap housing base of the embodiment of Figure 9 from another angle;
Figure 12 is a perspective view of a modified cover for a trap housing according to this invention carrying a diverter or barrier which extends into the trap intermediate the spaced electrodes when the cover is closed;
Figure 13 is a perspective view of a trap similar to the embodiment of Figure 9, but with a modified cover such as seen in Figure 12 in a partially closed position;
Figure 14 is a perspective view of yet another embodiment of animal trap according to this invention incorporating a cover such as seen in Figure 12, but replacing the angled barriers of the embodiment of Figure 9 with a diverter or barrier extending upwardly from the floor toward the cover intermediate the entrance opening and the downwardly extending plate carried by the cover;
Figure 15 is a perspective view of the trap of Figure 14 from another angle;
Figure 16 is a perspective view of an embodiment of animal trap according to this invention including an inclined plane trap assembly in combination with a unique cover such as seen in Figure 12 to minimize the possibility that a target animal will reverse itself before being electrocuted; and
Figure 17 is a perspective view of the trap of Figure 16 from another angle.

Like reference characters refer to like parts throughout the several views of the drawings.

### DETAILED DESCRIPTION OF THE PREFERRED EMBODIMENTS

In describing preferred embodiments of the invention illustrated in the drawings, specific terminology will be resorted to for the sake of clarity. However, the invention is not intended to be limited to the specific terms so selected, and it is to be understood that each specific term includes all technical equivalents which operate in a similar manner to accomplish a similar purpose.

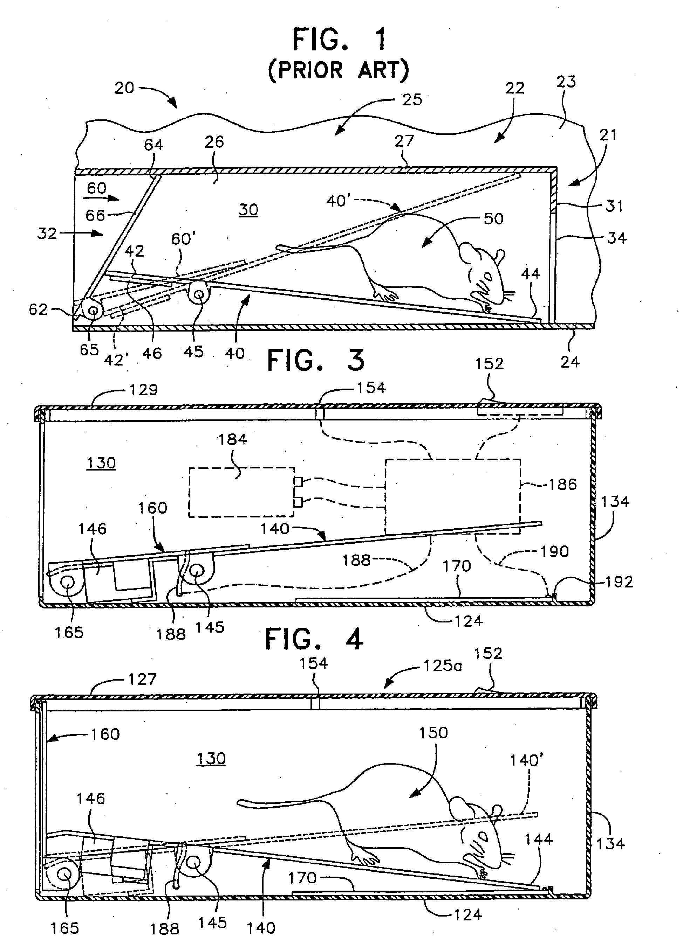

Referring to Figure 1, portions of a prior art animal trap are designated generally by the reference numeral 20 with an inclined plane trap assembly designated generally by the reference numeral 25 therewithin.

A housing 22 includes peripheral walls, a portion of one sidewall being illustrated at 23, a bottom wall 24, and an openable cover (not shown) together defining an enlarged enclosure, generally shown at 21, for retaining one or more captured animals.

The inclined plane trap assembly 25 includes sides, one of which is shown at 26 (and may be a portion of the side wall 23 of the housing 22), and a roof 27 which, together with a portion of the bottom wall 24 of the housing 22 define an elongated passageway 30. At one end of the passageway 30 is an entrance opening 32 communicating with the exterior of the housing 22 and, at the other end of the passageway 30, is a back wall 34 communicating with the holding chamber 21 defined by the housing 22.

A floor member 40 extends along the length of the passageway 30 intermediate the sides thereof, with first end portions 42 juxtaposed to the entrance opening 32 and opposite second end portions 44 juxtaposed to the back wall 34. A pivot element 45 is fixed between the sides of the trap assembly 25 in any conventional manner and underlies and supports the floor member 40 intermediate its end portions 42, 44. A counterweight 46 is secured to the underside of the first end portions 42 of the floor member 40 to manually bias the floor member 40 to a first or "open" position, shown in dotted lines in Figure 1, in which the first end portions 42' are lowered and the second end portions 44' are raised. The pivot element 45 is offset toward the first end portions 42 to define a greater lever arm from the second end portions of the floor member 40 so that when an animal, such as the mouse or rat illustrated schematically at 50, passes the pivot element 45 on its way to the back wall 34 wherein bait can be placed, the floor member 40 is tilted to a second or "closed" position, shown in solid lines in Figure 1, in which the first end portions 42 are lowered and the second end portions 44 are raised.

A door member 60 has bottom edge portions 62 and a top edge 64. A hinge element 65 pivotally secures the bottom edge portions 62 of the door member 60 adjacent to the entrance opening 32 for movement of the door member 60 between a lowered position, shown in dotted lines in Figure 1, in which the door member 60' rests primarily on the first end portions 42' of the floor member 40' when the floor member 40' is in its first position, to provide access to the passageway 30 by a targeted animal 50 through the entrance opening 32, and a raised position, shown in solid lines in Figure 1, in which the door member 60 is lifted by movement of the first end portions 42 of the floor member 40 when the floor member 40 is moved from its first position to its second position by the weight of the animal 50 on the second end portions 44 of the floor member 40. When the door member 60 is in its raised position as shown in solid lines in Figure 1 it tends to block any attempt by the animal 50 to return to the entrance opening 32 and, thereby, escape from the trap.

It is noted that the upper edge 64 of the door member 60 engages the undersurface of the roof 27 of the trap assembly 25 before the door member 60 reaches a vertical orientation. In this a manner, the weight of the door member 60 biases the door member 60 about the hinge element 65 toward its lowered position. Thus, when the animal 50 steps from the second end portions 44 of the floor member 40 through the exit opening 34 of the passageway 30 into the holding chamber 21 the counterweight 46 moves the floor member 40 from the second position to the first position, the door member 60 drops onto the first end portions 42 of the floor member 40, and the trap assembly 25 is automatically reset.

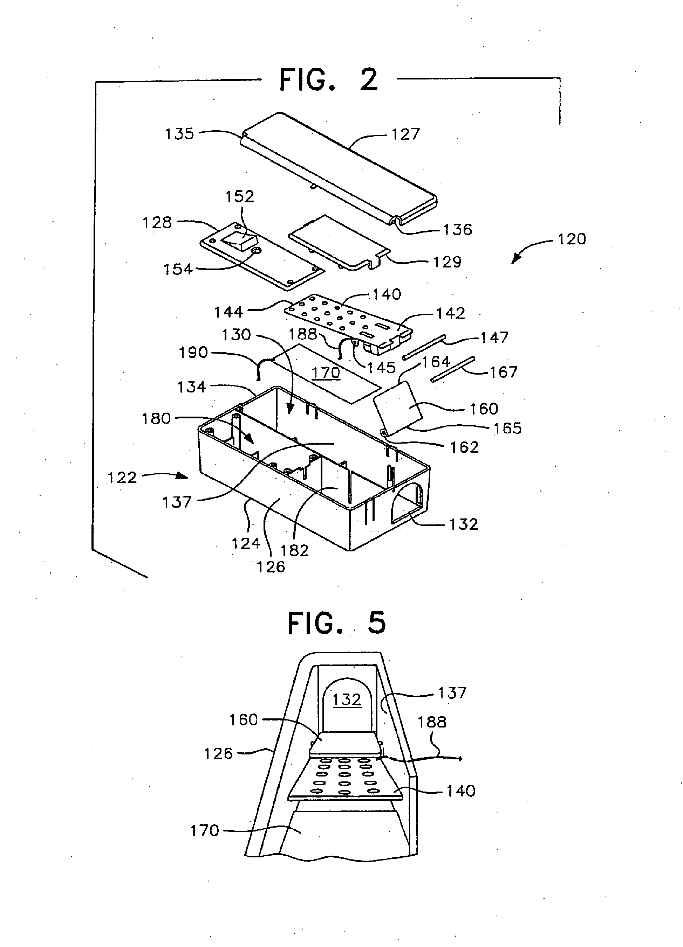

Figure 2 illustrates an exploded view of one embodiment of an electronic animal trap 120. A housing 122 is formed entirely of plastic, including the portions defining the passageway 130, only the inclined plane tilting floor member 140 and its pivot element 145 and the door member 160 and its hinge element 162, preferably being formed of metal. Of course, the bottom plate 190 is also metal to facilitate electrical contact.

The ability to form the housing 122 of plastic simplifies the manufacturing of the trap and enables the incorporation of additional features at minimal cost. The housing 122 has a bottom wall 124, upstanding peripheral walls 126, and a roof 127. The roof 127 includes a cover 128 which carries a switch or button 152. The switch 152 toggles from an "on" or standby position to an "off" or reset position. The trap 120 is activated by way of the switch 152.

To indicate activation of the trap, an LED 154 is mounted on the cover 128 and electrically connected to the trap. The LED 154 turns "on" during activation of the trap and provides a visual indication to the user.

The cover 128 extends over an electronics area generally indicated with numeral 180 with a battery lid 129. The battery lid 129 covers an area 182 which contains a power supply 184. Of course, it has been contemplated to further simplify the assembly by using a single roof.

The bottom wall or base 124, peripheral wall 126, back wall 134 and roof 127 together defining an enclosure for holding the targeted animal. Portions of the housing are movable between a closed position in which the captured animal is retained within the enclosure, and an opened position in which access is provided to the enclosure to remove electrocuted the animal therefrom. For example, the roof 127 may pivotally rotate about hinges 135, 136 to open the trap for disposal of the carcass of an electrocuted animal.

The inclined plane trap assembly includes outer side 126 and a parallel inner side 137 defining the elongated passageway 130. An entrance opening 132 at one end of the passageway 130 communicates with the exterior of the housing through an aperture in one of the peripheral walls of the housing. A back wall 134 at the other end of the of the passageway 130 is one of the peripheral walls.

The trap assembly further includes a floor member 140 extending along the passageway 130 intermediate the sides. The floor member 140 has a first end portion 142 juxtaposed to the entrance opening 132 and an opposite second end portion 144 juxtaposed to the back wall 134. A pivot element 145 underlies and supports the floor member 140 intermediate its end portions for tilting movement of the floor member 140 between a first position in which the first end portion 142 is lowered and the second end portion 144 is raised and a second position in which the first end portion 142 is raised and the second end portion 144 is lowered. A floor galvanized pin or carbon steel wire 147 extends through pivot 145 for permitting floor 140 to rotate or, more specifically, to perform a teeter-totter effect.

A door member 160 has bottom edge portions 162 and a top edge 164 with a hinge element 165 secured to the bottom edge portions 162 adjacent to the entrance opening 132 for pivotal movement of the door member 160 between a lowered position in which the door member 160 rests on the first end portions 142 of the floor member 140 when the floor member 140 is in its first position to provide access to the passageway 130 by a targeted animal through the entrance opening 132 and a raised position where the door member 160 blocks the entrance opening 132. A door galvanized pin or carbon steel wire 167 extends through hinge element 165 for permitting door 160 to rotate.

The door member 160 is biased toward its lowered position because the top edge 164 engages the roof 127 before it reaches a vertical position. The weight 146 of the door member 160 on the first end portion of the floor member 140 when the door member is in its lowered position maintains the floor member 140 in its first position, and the weight of an animal on the floor member 140 tilts the floor member 140 to its second position when the animal 150 passes from the entrance opening 132 beyond the pivot element 165 to thereby lift the door member 160 to its raised position. This is a teeter-totter movement of the floor member 140.

A power supply 184 provides power to the trap. The supply 184 can be two AA batteries or some other combination. Additionally, it has been contemplated the trap could be electrically connected to a wall outlet The power supply 184 in the battery form sits in the power supply area 182. The battery cover 129 is snap fitted for easy entering of the area 182 to replace expired batteries.

A bottom plate 170 is positioned near the back wall 134 and extends parallel to the bottom wall 124. A portion of the bottom plate 170 is in physical contact with the floor member 140 when the floor member 140 is moved from its first position to its second position. A circuit member 186 is electrically connected to the power supply 184 to convert the power to electricity.

A floor electrical connection member 188 receives the electricity from the circuit member 186. The floor electrical connection member 188 also connects to the floor member 140 so that electricity can be provided to the floor member 140. This member 188 is primarily a wire which is soldered at or near the pivot 145.

A similar wire forms a bottom electrical connection member 190. This wire 190 is for receiving the electricity from the circuit member 186 and for connecting to the bottom plate 170 near the back wall 134 at connection point 192. This bottom electrical connection member 190 provides electricity to the bottom plate 170.

As shown in Figure 4, the weight of the animal 150 on the floor member tilts the floor member to its second position. When the animal 150 passes from the entrance opening 132, beyond the pivot element 145, its weight lifts the door member 160 to the raised position and blocks the animal 150 from leaving the trap.

At this point, the bottom plate 170 electrically contacts the floor member 140 causing electricity to flow through the bottom plate 170 and to the floor member 140, thus completing the circuit This in turn, electrocutes the animal 150 which is in contact with the floor member 140.

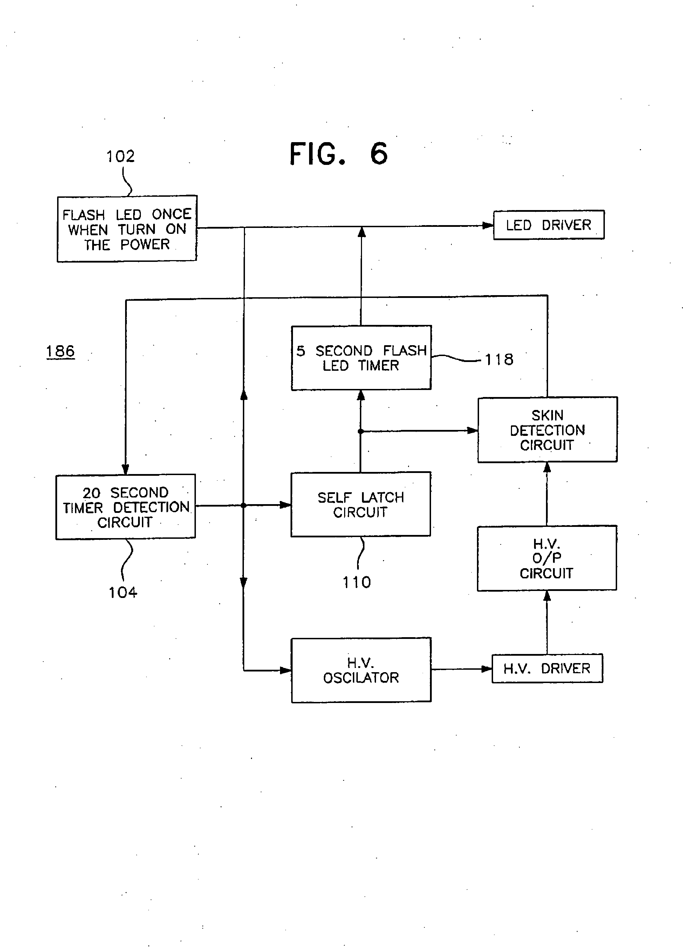

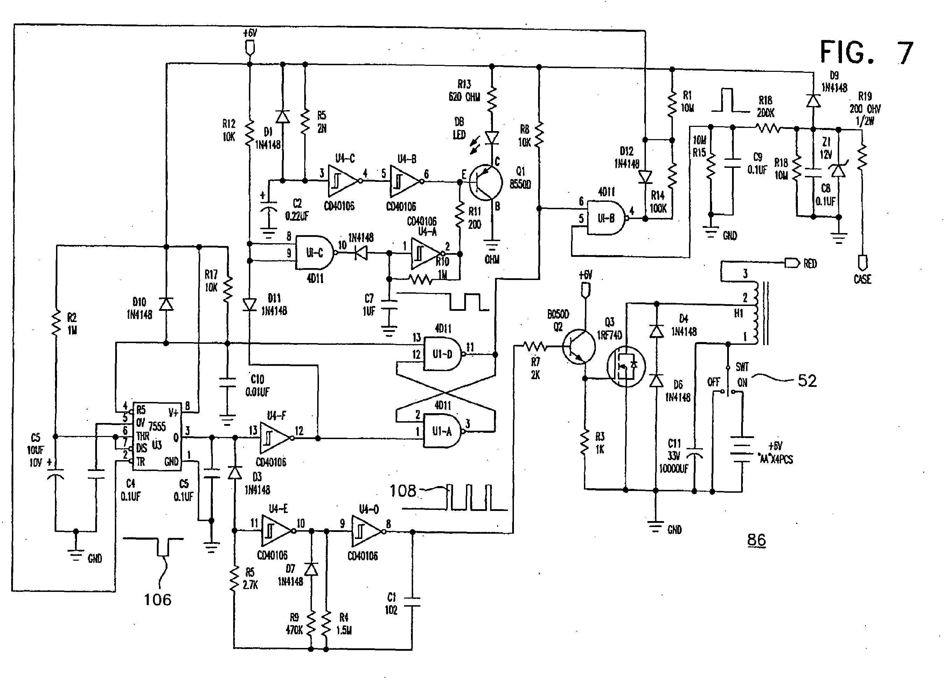

Figure 6 illustrates a block diagram of the electrical circuit and Figure 7 illustrates the same circuit in schematic form. In operation, when power is applied to the circuit member 186, in the form of either batteries such as two AA batteries or else from an electrical outlet, six volts are added to the R7, D11 and UAB, U4C power up circuit member 186 to trigger Q1 and make the LED circuit 102 flash once. The circuit member 186 is formed by high voltage output transformer, metal plate 140, kill metal plate 170, and the circuit formed by R13, D2, R1, and U1B. When the skin or any part of the mouse 150, or animal touches the plate 140 and brings it in to contact with kill metal plate 170, trigger U1B pin 5 and then pin 4 of U1B outputs a negative pulse 106 to trigger the timing circuit 104.

The timing circuit 104, formed by U3 (a 7555 timer) and the related components, receives the negative pulse 106, then the circuit 104 turns on for 20 seconds and pin 3 (OUTPUT) will output a logic high signal to trigger U4F and also trigger the pulse generator circuit (U4E, U4D), then a pulse 108 will drive the transistor Q2 and Q2 will drive the power mosfet IRF741. At this point, the transformer will step up the output pulse to about 2.5-3KV to instantaneously kill the mouse 150. During the same period, the oscillator circuit UAA, C7, rG will drive the transistor Q1 which in turn causes a 5 second flash timer 108 to generate the LED flash at the end of the period.

A self latching circuit 110 is also provided. Once the circuit member 186 is triggered by mouse 150 and the circuit member 186 starts the kill period, then the circuit can not be triggered again due to the self latch circuit 110 formed by U1A, U1D, U4F. The self latching circuit 110 will hold down the trigger signal so that the entire unit must be powered off first and then on again by way of switch 152 to put the unit into reset. Normally, during this time, the carcass can and should be removed from the trap. Once the carcass is removed the trap can be reset and ready to operate again.

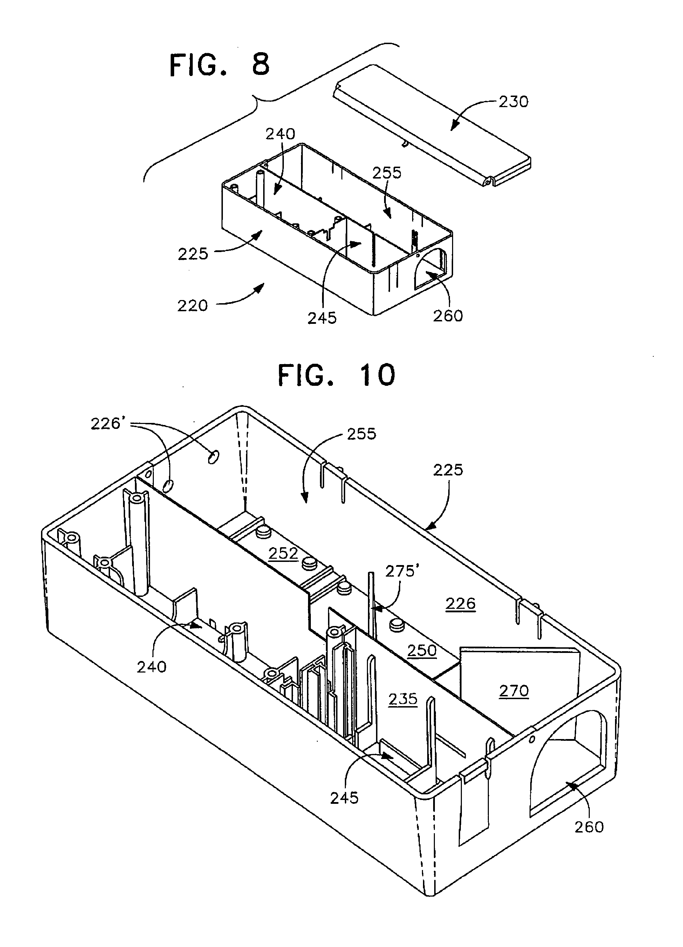

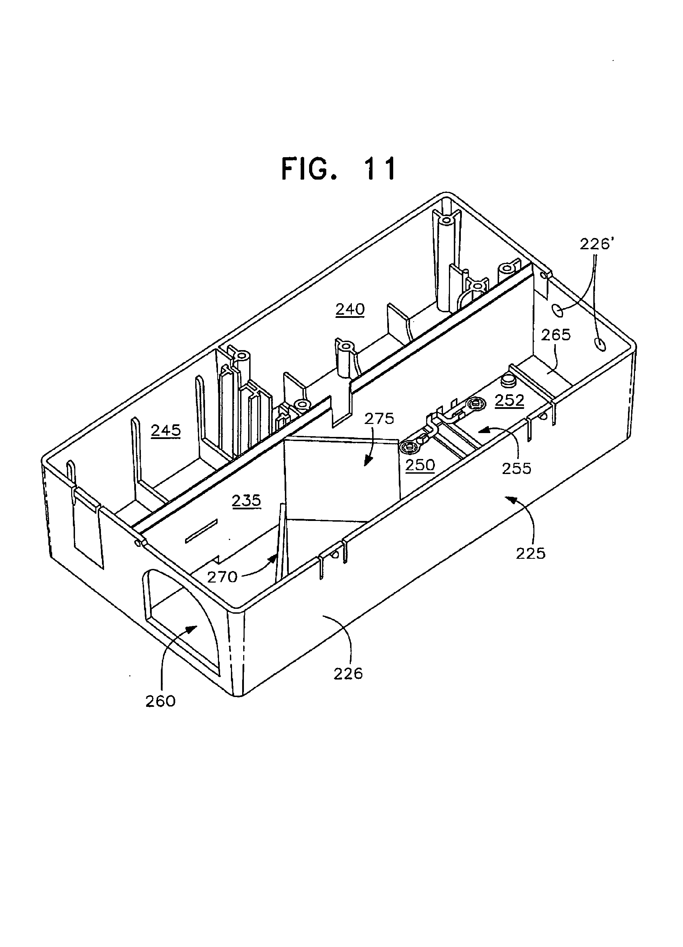

Reference is now made to Figures 8-17 for a discussion of electric or electronic animal traps according to the instant invention. A housing for the various trap embodiments of this invention is illustrated at 220 in Figure 1 and can be formed of plastic, metal or other suitable material. The housing 220 includes a base 225 and a simple cover 230 hingedly secured thereto in a well known manner. The base 225 is divided longitudinally by a separator 235 to provide compartments on one side for reception of the electronic circuitry (not shown in this Figure) at 240 and batteries (not shown) at 245.

The specifics of the electronic circuitry and energizing source are not critical to the various embodiments of this invention although the above-described circuitry is particularly useful in the traps of this invention. However, it is to be understood that other circuitry may be substituted therefore without departing from the broader aspects of the instant inventive concepts and, additionally, as an alternative to the use of batteries, appropriate means can be included to energize the trap from an a-c source or even an external d-c source. Additionally, a pair of contacts (not shown) can be incorporated in the base 225 and cover 230 so that when the cover 230 is lifted to access the interior of the base 225, the circuit is broken to preclude injury to the user.

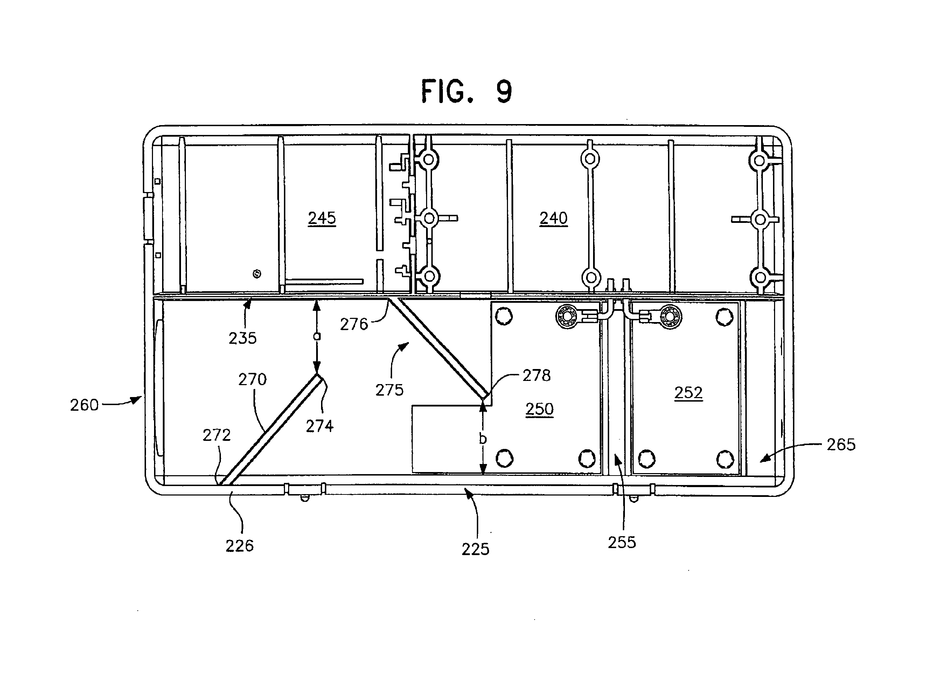

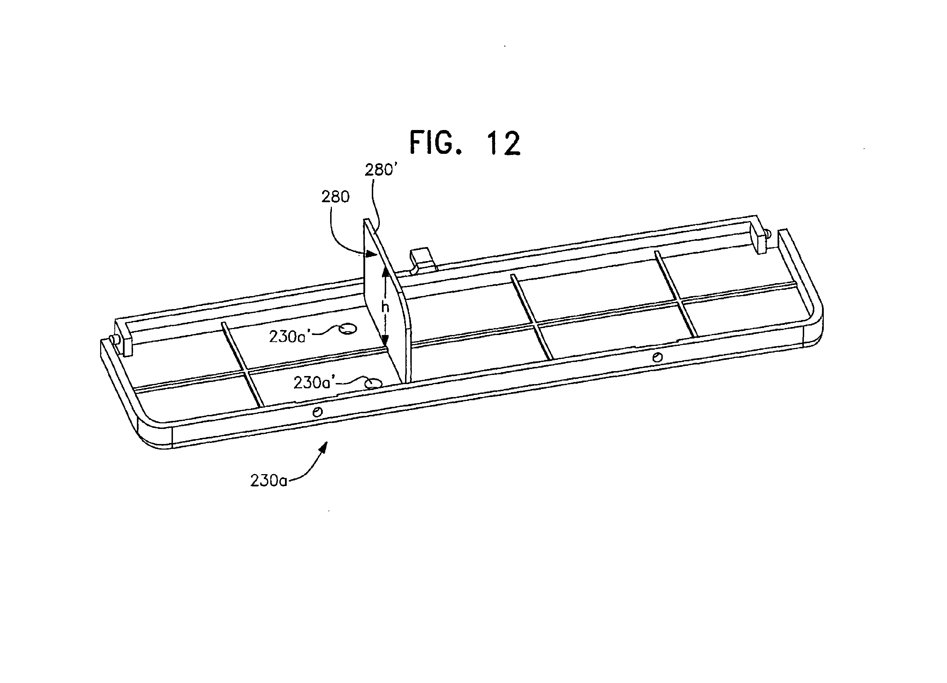

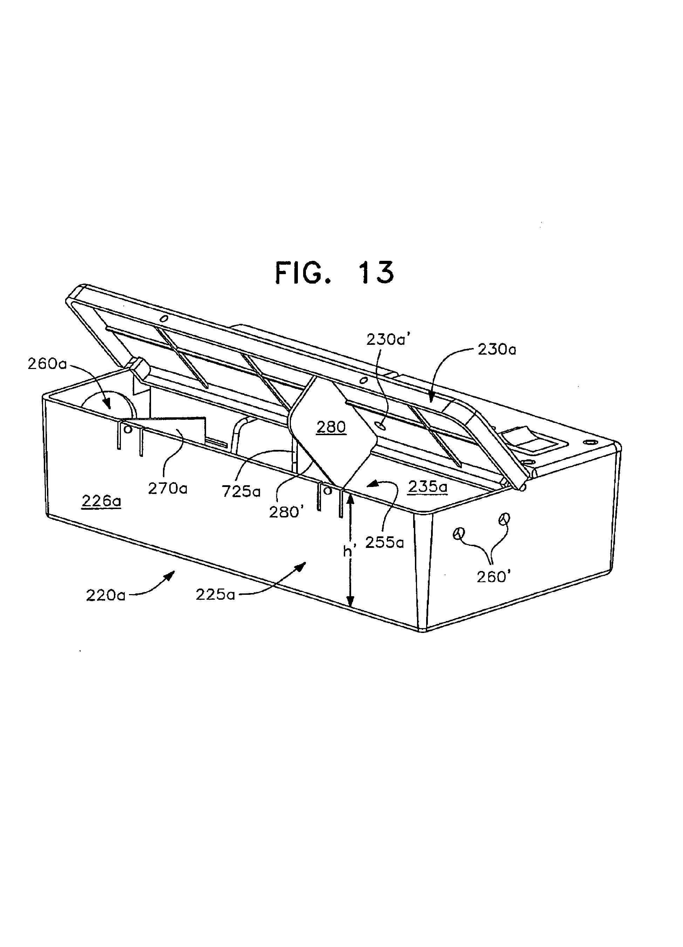

One form of two-diverter trap according to this invention is illustrated in Figures 9-11 and includes a pair of spaced charge plates or electrodes 250, 252 located in the "killing" chamber 255 and electrically connected in a well-known manner to the electronic circuitry so that contact with both charge plates simultaneously by a target animal will actuate an electronic charge to effectively kill the animal. A principle feature of this embodiment of the instant invention is the mechanism by which an animal entering the trap is directed along a tortuous path or maze to make contact with the charge plates 250, 252. In this respect, a pathway is defined between the side wall 226 of the housing base 225 and the separator 235 from the trap opening entrance 260 to a bait receiving location 265, with the charge plates 250, 252 interposed in this path. Openings such as 226' in the side wall, or elsewhere such as the openings 230a' seen in the cover of Figures 12 and 13, may be provided to permit the odor of bait, if any, to exude to the atmosphere and attract the animal to the trap.

In lieu of the tilting platform trapping mechanism of the embodiment of Figures 2-5, this embodiment of the instant invention substitutes at least two fixed barriers or diverter members 270, 275 positioned between the opening 260 and the killing chamber 255. The diverter 270 has one end 272 fixed to the side wall 226 of the base 225, and extends at approximately a 45° angle toward the killing chamber, with the end 274 stopping short of the separator 235 to define a space "a" therebetween for passage of an animal. The second diverter 275 has one end 276 fixed to the separator 235, and extends at approximately an oppositely directed 45° angle toward the killing chamber, with its second end 278 spaced from the side wall 226 by a distance "b", again sufficient for an animal to pass through. Each of the diverters 270,275 extend upwardly at least substantially the full height of the side walls of the housing 225 so as to preclude an animal passing over the tops thereof when the cover 230 is closed.

As will be seen best in Figure 9, the end or edge portions 274 of the first diverter 270 and the end or edge portions 278 of the second diverter 275 overlap so that an animal entering the trap opening 260 does not have a clear view along the pathway, but must pass through a "maze" formed at "a" and "b" to reach the bait 265. Since mice and other such small animals are curious and attracted to dark spaces, the pathway from the opening 260 will entice them into the trap housing, whether a bait is present or not. However, placement of a quantity of odoriferous material such as peanut butter at the end 265 of the pathway will further attract the animal into the killing chamber 255.

Once the animal passes the first diverter 270 on its way to the space "b", it no longer has a clear view of the opening 260 behind it and is discouraged from reversing its direction. Thus, as the animal progresses along the pathway from the opening 260, through the spaces "a" and "b" toward the bait-receiving area 265, it will step onto the charge plates 250, 252, which are slightly spaced apart, but close enough that the animal must contact both plates simultaneously before reaching the bait at 265. Upon doing so, the circuit will be closed by the animal's body and an electrical charge will kill the animal. The barrier 275 also acts as a blocking mechanism inhibiting the animal from retreating from contact with the charge plates 250, 252 after the initial shock, insuring continued contact until the animal is electrocuted. The cover 230 can then be opened to break the circuit and dispose of the animal, following which the trap can be reused in an obvious manner.

Although only two barriers or diverters are shown at 270,275 and for all practical purposes, this is sufficient to effect both the maze-like pathway and to protect against accidental contact with both of the charge plates 250, 252, from a straight element such as a screwdriver or the like (not shown), additional barriers can be included to render the path even more tortuous without diverging from the instant inventive concepts.

Referring now to Figures 12 and 13, a modified trap incorporating a third barrier is illustrated. In this trap, parts similar to the embodiment of Figures 9-11 are designated by the same reference numeral followed by the suffix "a".

For all intents and purposes, the base 225a of the trap 220a is identical to the base 225 of the trap 220. However, the cover 230a of the trap 220a differs from the cover 230 of the trap 220 in having affixed to the underside thereof a third diverter or barrier 280 which is positioned along the length of the cover 230a to extend into the space between the electrodes 250, 252 when the cover 230a is pivoted to its closed position. The height h of the barrier 280 is less than the height h' of the side walls of the housing 225a to provide a limited space between the lower edge 280' of the barrier 280 and the floor of the base 225a to force a target animal to squeeze under the barrier 280 as it moves toward the bait. Thus, at the time the animal's front paws engage the second electrode and energize the electrocuting circuit, its body is extended and contorted such that withdrawal from contact with the electrodes is rendered more difficult.

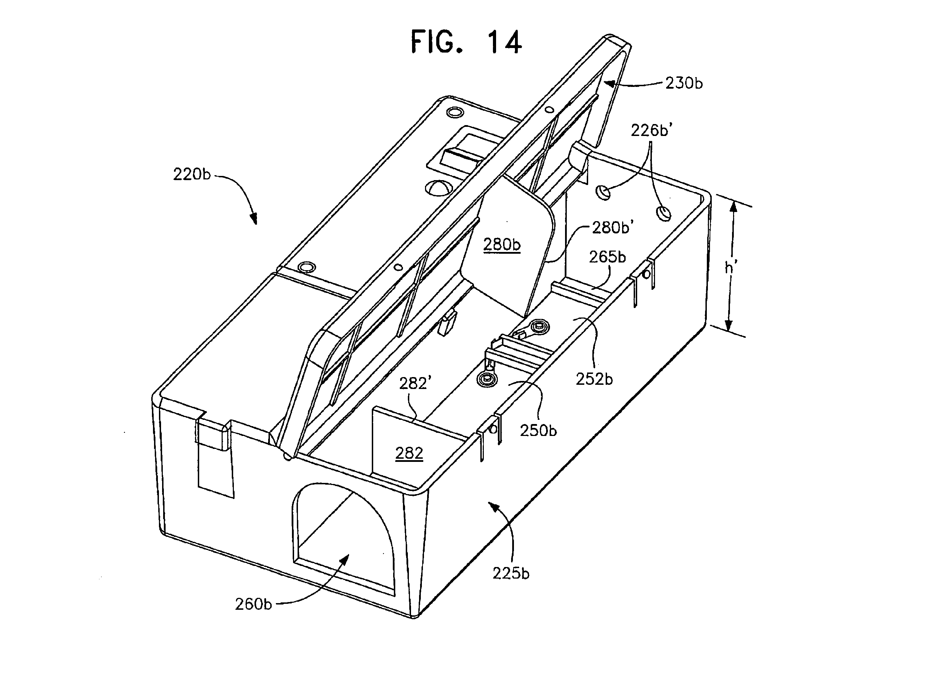

Although the diverter 280 is preferably carried by an openable cover, it could be carried by a fixed cover if access to the chamber for disposing of the electrocuted carcasses is provided elsewhere, or, for that matter, it could be fixed to the sides of the pathway. While it is evident that a diverter such 280 is best used in conjunction with the angled diverters as shown in Figures 12 and 13, it has independent utility in minimizing escape from an electric or electronic trap of other constructions. See, for example, the discussion below of the embodiments of Figures 14 and 15 and Figures 16 and 17.

The two-diverter trap shown in Figures 9-11 of the drawings was tested both with the diverters illustrated and without diverters. Additionally, traps containing a third diverter as seen in Figs. 12 and 13 were tested. The tests were conducted on both male and female wild *Mus Musclus,* the house mouse, of varying size and age. Mice were collected from wild populations on farms and adjusted in the laboratory for two to three weeks before being used in the tests.

Five field mice were placed in an arena measuring 4 x 8 x 3 ft (width by length by height). Within the arena, a shelter containing shredded paper towels was placed at one end. On the opposite end of the arena, a food (Purina lab chow) and water source were placed. The 5 mice were then allowed to acclimate for a period of 8 hours within this arena. During this period, the lights were left "on" to simulate daytime. At the end of this period, the corresponding test traps were placed into the arena for a period of approximately 16 hours. All traps were baited with creamy peanut butter (Shur-Fine brand). During this time, the lights were turned "off" to simulate nighttime. Five traps were placed in each arena with each arena considered a replication. Three arenas were used during each testing period.

The traps were evaluated based on three criteria: (1) **Kill rate** (the number of mice killed divided by total number of traps); (2) **Escape rate** (where the mouse has triggered the trap but was not killed); and (3) **Interaction** (the total number visited by mice resulting in either a kill or escape).

Sample *t*-tests were used to determine the significant differences between the traps with and without diverters (Windows 2000, Excel, Microsoft Corporation).

*Kill Rate:* The traps with two and three diverters had mean kill rates of 83.4% and 100%, respectively, compared to 43.4% for traps without diverters. When analyzed using a *t*-test at 95% probability, the kill rate of the traps with two and three diverters was significantly greater than the traps with no diverters. (See Tables 1-3)

*Escape:* The traps with two and three diverters had mean escape rates of 3.33% and 0%, respectively, compared to 53.33% for the trap without diverters. When analyzed using a *t*-test at 95% probability, the traps without diverters had a significantly higher escape rate compared to the traps with two and three diverters. (See Tables 1-3)

*Interaction:* The traps with two and three diverters had mean interaction rates of 86.67% and 90%, respectively, compared to 96.67% for the trap without diverters. When analyzed using a *t*-test at 95% probability, the interaction was not significantly different. (See Tables 1-3)

The traps were identical to each other with the exception of the two and three diverters, yet the trap with the diverters performed significantly better, killing more mice with fewer escapes without significantly reducing interaction.

Although not wishing to be bound by an explanation of these results, there are two theories for why the diverters reduce the escape rate. First, as the mouse is moving through the trap without diverters, it moves slowly. When it touches the second plate and gets shocked, it is able to back off. In the trap with diverters, the second diverter acts as a barrier, preventing the mouse from retreating. In one instance, there was fur observed on one of the diverters of the trap that had an escape, indicating that the barrier did interfere with the retreat of the mouse.

The second theory is based on the space in the trap. The diverters restrict the movement of the mouse until it gets close to the second plate and peanut butter. At this point, the trap opens up to the entire width of the tunnel. It is believed that the mouse is more tentative in the confined space in the diverter areas, but once it sees the open space and the peanut butter, it is more willing to commit. With more of the momentum of the mouse going forward, it is less likely for it to retreat once the shock is triggered.

Finally, traps with three diverters had an even greater kill rate and lower escape rate. Results have shown in these tests that mice not only move back away from the electric plates after being shocked, but also move up. Traps with a third diverter prevent the mouse from jumping in this upward direction to escape. In fact, dead mice removed from these traps after being shocked have indentations on their back from hitting the third diverter.

In conclusion, both traps with two and three diverters are significantly better in controlling mouse populations than traps without diverters. Mice have an instinctive behavior to avoid being shocked, however, this behavior can be predicted and prevented through the use of diverters in the trap design.

Regardless of the theory, the results are self-evident from the data below:

**Table 1: Electronic Mouse Trap with Two Diverters**

| Percent Kill | | | | | | | | | | | |
|---|---|---|---|---|---|---|---|---|---|---|---|
| | # Mice Killed/Rep (5 mice per Rep) | | | | | | | AVE | | | |
| | 1 | 2 | 3 | 4 | 5 | 6 | Total Killed | Per Rep | SD | % | |
| Mortality | | | | | | | | | | | |
| | 5 | 4 | 3 | 4 | 4 | 5 | 25 | 4.17 | 0.75 | | 83.33 |

| Percent Interaction | | | | | | | | | | | |
|---|---|---|---|---|---|---|---|---|---|---|---|
| | # Mice Interacted/Rep (5 mice per Rep) | | | | | | Total | AVE | | | |
| | 1 | 2 | 3 | 4 | 5 | 6 | Interaction | Per Rep | SD | % | |
| Interaction | | | | | | | | | | | |
| | 5 | 4 | 3 | 5 | 4 | 5 | 26 | 4.33 | 0.82 | | 86.67 |

| Percent Escape | | | | | | | | | | | |
|---|---|---|---|---|---|---|---|---|---|---|---|
| | # Mice Escaped/Rep (5 mice per Rep) | | | | | | | AVE | | | |
| | 1 | 2 | 3 | 4 | 5 | 6 | Total Escapes | Per Rep | SD | % | |
| Escape | | | | | | | | | | | |
| | 1 | 3 | 2 | 4 | 2 | 4 | 16 | 2.67 | 1.21 | | 3.33 |

**Table 2: Electronic Mouse Trap with Three Diverters**

| Percent Kill | | | | | | | | | |
|---|---|---|---|---|---|---|---|---|---|
| | # Mice Killed/Rep (5 mice per Rep) | | | | | AVE | | | |
| | 1 | 2 | 3 | 4 | Total Killed | Per Rep | SD | % | |
| Mortality | | | | | | | | | |
| | 5 | 3* | 5 | 5 | 15 | 5.00 | 0.00 | | 100 |

| Percent Interaction | | | | | | | | | |
|---|---|---|---|---|---|---|---|---|---|
| | # Mice Interacted/Rep (5 mice per Rep) | | | | Total Interaction | AVE | | | |
| | 1 | 2 | 3 | 4 | | Per Rep | SD | % | |
| Interaction | | | | | | | | | |
| | 5 | 3* | 5 | 5 | 15 | 5.00 | 0.00 | | 100 |

| Percent Escape | | | | | | | | | |
|---|---|---|---|---|---|---|---|---|---|
| | # Mice Escaped/Rep (5 mice per Rep) | | | | | AVE | | | |
| | 1 | 2 | 3 | 4 | Total Escapes | Per Rep | SD | % | |
| Escape | | | | | | | | | |
| | 0 | 0 | 0 | 0 | 0 | 0.00 | 0.00 | | 0 |

| | | | | | | | | | |
|---|---|---|---|---|---|---|---|---|---|
| * Two mice escaped from test arena. | | | | | | | | | |

**Table 3: Electronic Mouse Trap without Diverters**

| Percent Kill | | | | | | | | | | | |
|---|---|---|---|---|---|---|---|---|---|---|---|
| | # Mice Killed/Rep (5 mice per Rep) | | | | | | | AVE | | | |
| | 1 | 2 | 3 | 4 | 5 | 6 | Total Killed | Per Rep | SD | % | |
| Mortality | | | | | | | | | | | |
| | 4 | 2 | 3 | 0 | 3 | 1 | 13 | 2.17 | 1.47 | | 43.33 |

| Percent Interaction | | | | | | | | | | | |
|---|---|---|---|---|---|---|---|---|---|---|---|
| | # Mice Interacted/Rep (5 mice per Rep) | | | | | | Total | AVE | | | |
| | 1 | 2 | 3 | 4 | 5 | 6 | Interaction | Per Rep | SD | % | |
| Interaction | | | | | | | | | | | |
| | 5 | 5 | 5 | 4 | 5 | 5 | 29 | 4.38 | 0.41 | | 96.67 |

| Percent Escape | | | | | | | | | | | |
|---|---|---|---|---|---|---|---|---|---|---|---|
| | # Mice Escaped/Rep (5 mice per Rep) | | | | | | | AVE | | | |
| | 1 | 2 | 3 | 4 | 5 | 6 | Total Escapes | Per Rep | SD | % | |
| Escape | | | | | | | | | | | |
| | 1 | 3 | 2 | 4 | 2 | 4 | 16 | 2.67 | 1.21 | | |
| 53.33 | | | | | | | | | | | |

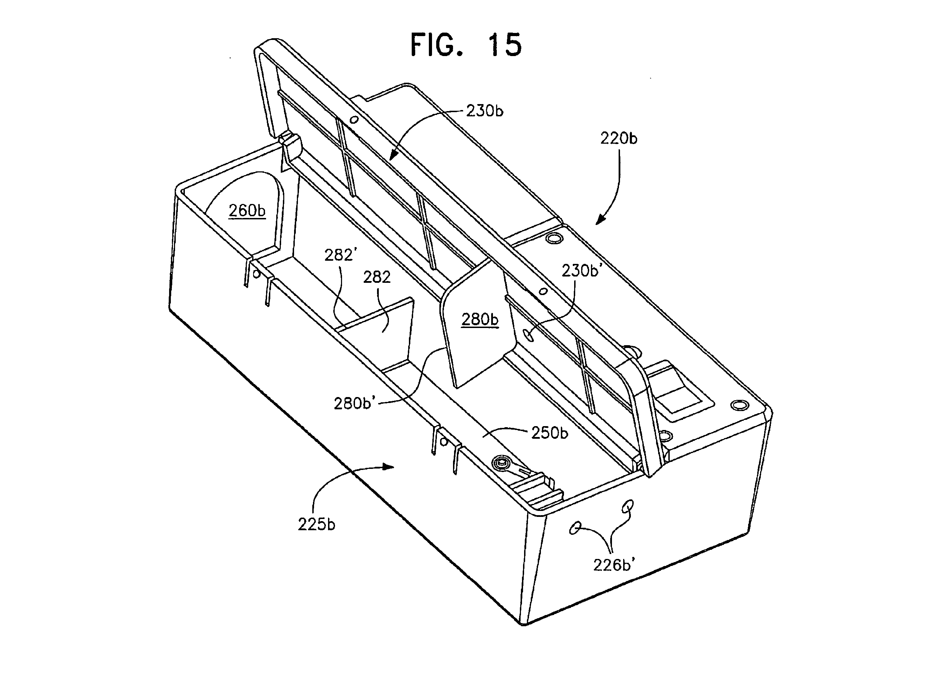

Reference is now made to Figures 14 and 15, where yet another embodiment of the instant invention is illustrated, with parts similar to those of the previous embodiments being designated by the same reference numeral followed by the suffix "b".

Again, for all intents and purposes, the base 225b of the trap 220b is identical to the base 225 of the trap 220 or the base 225a of the trap 220a, with the exception that the angled diverters have been eliminated. In this embodiment, the cover 2230b is identical to the cover 230a and includes a downwardly extending plate or barrier 280b positioned along its length to fit in the space between the electrodes 250b, 252b when the cover 230b is pivoted to its closed position. Additionally, the trap 220b includes an upwardly extending plate or barrier 282 interposed between the entrance opening 260b and the downwardly depending plate 280b. The height of each of the plates 280b, 282 is less than the height h' of the side walls of the housing 225b to provide a limited space over the upper edge 282' of the plate 282 and under the lower edge 280b' of the plate 280b for the target animal to pass. According to a preferred feature of this invention, the upper edge 282' of the plate 282 is spaced from the floor of the housing 225b by a distance greater than the distance from the lower edge 280b' of the plate 280b whereby the plates 280b, 282 together define a barrier blocking simultaneous access to the electrodes 250b, 252b from a straight element passing through the entrance opening 260b.

Thus, with this embodiment, the limited space between the downwardly depending plate 280b and the floor of the housing 225b forces the target animal to squeeze thereunder making it almost impossible for the animal to pull back once its front paws have contacted the second electrode 252b. The upwardly extending plate 282 also functions to discourage a target animal from reversing its path because of the difficulty in squeezing back through the space between the upper edge 282' of the plate 282 and the undersurface of the cover 230b.

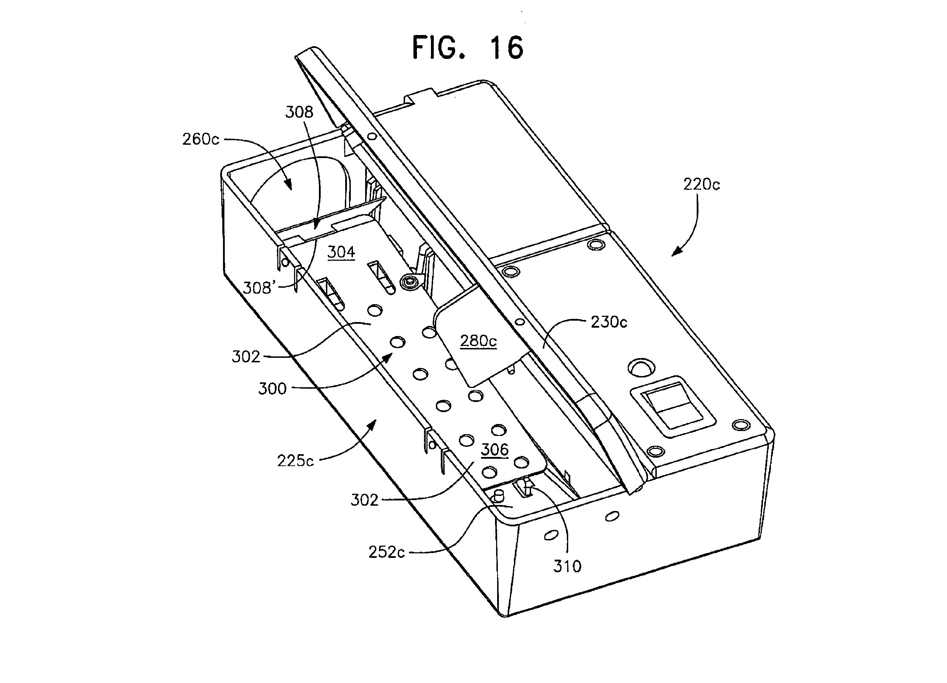

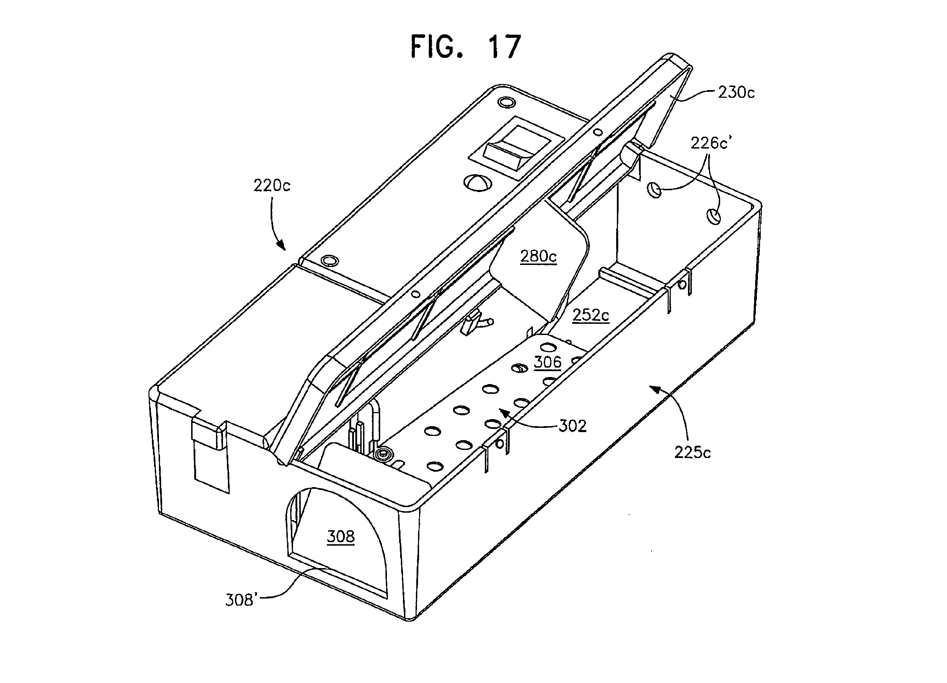

The embodiment of Figures 16 and 17 is included to illustrate that, even if an inclined plane or tilting platform assembly is incorporated in a trap according to the instant invention, the inclusion of a cover of the type seen in Figure 12, including a downwardly extending plate which is positioned intermediate the electrode members when the cover is closed, enhances the effectiveness of the trap by minimizing the likelihood that the target animal can back away from the second electrode before it is electrocuted. In this embodiment, parts similar to the previous embodiments are designated by the same reference numeral followed by the suffix "c". For all intents and purposes, the trap 220c is very similar to the trap 220a of Figures 12 and 13, with the exception that an inclined plane or tilting platform assembly 300 is incorporated adjacent the entrance opening 260c. The manner in which the tilting platform or inclined plane assembly 300 operates is well known as described above. As shown, the inclined plane trap assembly 300 includes a platform element 302 having a first end portion 304 juxtaposed to the entrance opening 260c and a second end portion 306 juxtaposed to the second electrode 252c. A pivot element (not shown) underlies and supports the platform element 302 intermediate its end portions 304, 306 for tilting movement of the platform element 302 in a well known manner between a first position in which the first end portion 304 is lowered and the second end portion 306 is raised, and a second position in which the first end portion 304 is raised and the second end portion 306 is lowered. A door member 308 is hinged at its lower edge 308' adjacent to the entrance opening 260c for pivotal movement between a lowered position in which the door member 308 rests on the first end portion 304 of the platform element 302 when the platform element is in its first position to provide access to the passageway by a target animal through the entrance opening 260c, and a raised position in which the door member 308 is lifted by upward movement of the first end portion 304 of the platform element 302 when the platform element 302 is moved from its first position to its second position. The door member 308 is biased toward its lowered position under the force of gravity, the weight of the door member 308 on the first end portion 304 of the platform element 302 when the door member 308 is in its lowered position normally maintaining the platform element 302 in its first position. However, the weight of a target animal on the second end portion 306 of the platform element 302 tilts the platform element 302 to its second position when the target animal passes from the entrance opening 260c beyond the pivot element thereby lifting the door member 308 to its raised position, blocking escape through the entrance opening 260c by a target animal on the platform element 302.

In the embodiment shown, the platform element 302 is connected to the circuitry (not shown) to electrify the same to function as a first electrode. An insulator 310 in the form of a plastic or rubber element underlies the second end portion 306 of the platform element 302 so that the target animal is only shocked when its rear paws are on the platform element 302 and its front paws are on the second electrode 252c. In this embodiment, the platform element 302, in either of its positions, blocks simultaneous contact with both of the electrodes by a straight element passing through the entrance opening 260c.

When the cover 230c is closed, the downwardly depending plate 280c is interposed between the end portion 306 of the platform element 302 and the second electrode 252c, forcing a target animal to squeeze under the lower edge 280c' of the plate 280c in its attempt to get to the bait. In doing so, it must then step on the second electrode 252c and, for all intents and purposes, is precluded from pulling back before the circuitry is closed by the animal's body and the animal is electrocuted.

Thus, it will be seen that, even if a tilting platform or inclined plane trap is desired, the incorporation of the downwardly depending diverter or barrier plate carried by the trap housing cover as seen in the embodiment of Figures 16 and 17 adds further advantages in both minimizing the likelihood of escape by a target animal before electrocution and, additionally, by cooperating with the platform element to make it virtually impossible for a screwdriver or a child's finger inserted through the entrance opening 260c to simultaneously contact both the platform element or first electrode 102 and the second electrode 252c.

In summary, in each of the embodiments of Figures 9-17 of this invention, at least one diverter member is interposed in the pathway from the entrance opening along the interior of the housing to the second electrodes to discourage a target animal approaching the second electrode from reversing direction. Additionally, at least one barrier member is provided to block simultaneous contact with both of the electrodes by a straight element passing through the entrance opening. For the embodiments of Figures 9-15, there are literally no moving mechanical parts other than the cover so that the animal trap is inexpensive to manufacture, easy to maintain and highly effective in operation. Moreover, even with an inclined plane trap, the extra barrier plate enhances its effectiveness.

The foregoing descriptions and drawings should be considered as illustrative only of the principles of the invention. As noted, the invention may be configured in a variety of shapes and sizes and is not limited by the dimensions of the preferred embodiment. Numerous applications of the present invention will readily occur to those skilled in the art. Therefore, it is not desired to limit the invention to the preferred embodiments or the exact construction and operation shown and described. Rather, all suitable modifications and equivalents may be resorted to, falling within the scope of the claims.

## Claims

1. An animal trap comprising a housing including a base having a floor and side walls and defining an interior chamber, and a cover for said chamber,
an entrance opening communicating with said chamber,
a pathway leading from said entrance opening along the interior of said housing,
first and second spaced electrodes interposed in said pathway and circuitry electrically connected to said electrodes to initiate an electrical shock when said electrodes are simultaneously contacted by a target animal,
**characterized in that** at least a first diverter or barrier member (270, 280, 280b, 280c) is interposed in said pathway intermediate said entrance opening (132, 260, 260a, 260b, 260c) and at least said second electrode (252, 252b, 252c) to discourage a target animal approaching said second electrode (252, 252b, 252c) from reversing direction, and at least a second diverter or barrier member (275, 282) blocks simultaneous contact with both of said electrodes by a straight element passing through said entrance opening (132, 260, 260a, 260b, 260c).

2. The animal trap of claim 1, further including a bait-receiving location (265) at an end of said pathway remote from said entrance opening (132, 260, 260a, 260b, 260c).

3. The animal trap of claim 2, further including apertures (226', 226b', 230a', 260', 260b') through portions of said housing (122, 220, 225, 225a, 225b) to permit the odor of bait to exude to the atmosphere from said bait-receiving location (265).

4. The animal trap of claim 1, wherein said first and second diverter or barrier members (270, 275, 280, 280b, 280c, 282) are interposed in spaced relation in said pathway intermediate said entrance opening (132, 260, 260a, 260b, 260c) and at least said second electrode (252, 252b, 252c), said first and second diverter or barrier members (270, 275, 280, 280b, 280c, 282) together blocking visual access to said entrance opening (132, 260, 260a, 260b, 260c) by a target animal passing thereby to discourage the target animal from reversing direction.

5. The animal trap of claim 4, wherein said first diverter or barrier member (270) is juxtaposed to said entrance opening (132, 260, 260a, 260b, 260c) and directs a target animal in a first-angled direction along said pathway, and said second diverter or barrier member (275) redirects the target animal in a second direction angled to said first direction along said pathway.

6. The animal trap of claim 5 wherein each of said first and second diverter or barrier members (270, 275, 280, 280b, 280c, 282) includes a free edge portion (274, 278, 280', 280b', 282') about which a target animal must pass, and said free edge portions (274, 278, 280', 280b', 282') of said first and second diverter or barrier members (270, 275, 280, 280b, 280c, 282) are on opposite sides of any straight line from said entrance opening (32, 132, 260, 260a, 260b, 260c) to at least said second electrode (252, 252b, 252c).

7. The animal trap of claim 6, wherein said first and second diverter or barrier members (270, 275, 280, 280b, 280c, 282) extend substantially the full height of said chamber between said floor of said housing (122, 220, 225, 225a, 225b) and said cover (127, 230, 230a, 230b, 230c) when said cover (127, 230, 230a, 230b, 230c) is closed.

8. The animal trap of claim 6, wherein said pathway is defined by spaced walls (226, 235) of said housing (122, 220, 225, 225a, 225b), said first diverter or barrier member (270) having a first end (272) fixed to a first wall (226) defining said pathway and a second end (274) including said free edge portions spaced from a second wall (235) defining said pathway and extending at a first angle from its first (272) end to its second end (274), said second diverter or barrier member (275) having a first end (276) fixed to said second wall (235) and a second end (278) including said free edge portions spaced from said first wall (226) and extending at a second angle from its first end (276) to its second end (278), said second end (274) of said first diverter or barrier member (270) and said second end (278) of said second diverter or barrier member (275) each extending past a longitudinally extending midpoint of said pathway to block direct access from said entrance opening (132, 260, 260a, 260b, 260c) to at least said second electrode (252, 252b, 252c).

9. The animal trap of claim 8, wherein said first diverter or barrier member (270) extends at approximately a 45° angle relative to said first wall (226) and said second diverter or barrier member (275) extends at approximately an opposite 45° angle to said second wall (235).

10. The animal trap of claim 1, wherein said second diverter or barrier member (280b) extends downwardly into said chamber intermediate said spaced electrodes, said second diverter or barrier member (280, 280b, 280c) having a lower edge portion (280b') spaced from said floor of said base (124, 225, 225a, 225b) a distance forcing a target animal to squeeze under said second diverter or barrier member (280, 280b, 280c) as it approaches said second electrode (252, 252b, 252c).

11. The animal trap of claim 1, wherein said second diverter or barrier member (280, 280b, 280c) is carried by said cover (230, 230a, 230b, 230c).

12. The animal trap of claim 11, wherein said cover (230, 230a, 230b, 230c) is openable and said second diverter or barrier member (280, 280b, 280c) extends downwardly into said chamber when said cover (230, 230a, 230b, 230c) is closed.

13. The animal trap of claim 1, wherein said second diverter or barrier member (282) extends upwardly between said entrance opening (132, 260, 260a, 260b, 260c) and said first diverter or barrier member (280) and spaced therefrom, said second diverter or barrier member (282) having an upper edge portion (282') spaced from said floor a distance greater than said distance of said lower edge portion (280b') of said first diverter or barrier member (280) from said floor, whereby said first and second diverter or barrier members (280, 282) together block access to said electrodes by a straight element passing through said entrance opening (132, 260, 260a, 260b, 260c).

14. The animal trap of claim 10, further including an inclined plane trap assembly (300) interposed in said passageway and including a platform element (302) having a first end portion (304) juxtaposed to said entrance opening (132, 260, 260a, 260b, 260c) and a second end portion (306) juxtaposed to said second electrode (252, 252b, 252c), a pivot element (not shown) underlying and supporting said platform element (302) intermediate its end portions (304, 306) for tilting movement of said platform element (302) between a first position in which said first end portion (304) is lowered and said second end portion (306) is raised, and a second position in which said first end portion (304) is raised and said second end portion (306) is lowered, and a door member (308) having bottom edge portions (308') and a top edge, a hinge element secured to said bottom edge portions (308') of said door member (308) adjacent to said entrance opening (132, 260, 260a, 260b, 260c) for pivotal movement of said door member (308) between a lowered position in which said door member rests on the first end portion (304) of said platform element (302) when the platform element (302) is in its first position to provide access to the passageway by a target animal through said entrance opening (132, 260, 260a, 260b, 260c), and a raised position in which said door member (308) is lifted by movement of said first end portion (304) of said platform element (302) when said platform element (302) is moved from its first position to its second position, said door member (308) being biased toward its lowered position, the weight of said door member (308) on said first end portion (304) of said platform element (302) when said door member (308) is in its lowered position maintaining said platform element (302) in its first position, and the weight of a target animal on said second end portion (306) of said platform element (302) tilting said platform element (302) to its second position when the target animal passes from said entrance opening (132, 260, 260a, 260b, 260c) beyond said pivot element to thereby lift said door member (308) to its raised position, said door member (308), in its raised position, blocking return to said entrance opening (132, 260, 260a, 260b, 260c) by a target animal on said platform element (302), said platform element (302) being electrified and defining said first electrode, an insulator (310) underlying said second end portion (306) of said platform element (302) whereby the target animal is only shocked when it engages both said electrodes simultaneously, and said platform element (302) in either of its positions blocking simultaneous contact with both of said electrodes by a straight element passing through said entrance opening (132, 260, 260a, 260b, 260c).

## Patentansprüche

1. Tierfalle mit einem Gehäuse mit einem Fuß, der eine Bodenfläche aufweist, und Seitenwänden, die einen innere Kammer umschließen, sowie mit einer Abdeckung für die Kammer;
einer Zugangsöffnung, die mit der Kammer verbunden ist;
einem Durchgang, der von der Zugangsöffnung zum Gehäuseinneren führt;
wobei entlang des Durchgangs eine erste und eine zweite Elektrode beabstandet angeordnet und die Elektroden elektrisch an eine Schaltung angeschlossen sind, um einen elektrischen Schlag auszulösen, wenn ein Zieltier die Elektroden gleichzeitig berührt;
**dadurch gekennzeichnet, dass** mindestens ein erstes Ablenk- bzw. Sperrelement (270, 280, 280b, 280c) entlang des Durchgangs zwischen der Zugangsöffnung (132, 260, 260a, 260b, 260c) und mindestens der zweiten Elektrode (252, 252b, 252c) angeordnet ist, um ein sich der zweiten Elektrode (252, 252b, 252c) näherndes Zieltier von einer Richtungsumkehr abzuhalten, und dass mindestens ein zweites Ablenk- bzw. Sperrelement (275, 282) ein gleichzeitiges Berühren beider Elektroden durch einen durch die Zugangsöffnung (132, 260, 260a, 260b, 260c) eingeführten gradlinigen Gegenstand verhindert.

2. Tierfalle nach Anspruch 1 weiterhin mit einem Köderaufnahmeort (265) an einem von der Zugangsöffnung (132, 260, 260a, 260b, 260c) entfernt liegenden Ende des Durchgangs.

3. Tierfalle nach Anspruch 2 weiterhin mit Öffnungen (226', 226b', 230a', 260', 260b') in Teilen des Gehäuses (122, 220, 225, 225a, 225b), die den Ködergeruch vom Köderaufnahmeort (265) an die Umluft austreten lassen.

4. Tierfalle nach Anspruch 1, bei dem das erste und das zweite Ablenk- bzw. Sperrelement (270, 275, 280, 280b, 280c, 282) beabstandet entlang des Durchgangs zwischen der Zugangsöffnung (132, 260, 270a, 260b, 260c) und der mindestens zweiten Elektrode eingefügt sind, wobei das erste und das zweite Ablenk- bzw. Sperrelement (270, 275, 280, 280b, 280c, 282) gemeinsam einem vorbeilaufenden Zieltier die Sicht auf die Zugangsöffnung (132, 260, 270a, 260b, 260c) nehmen, um es von einer Richtungsumkehr abzuhalten.

5. Tierfalle nach Anspruch 4, bei dem das erste Ablenk- bzw. Sperrelement (270) der Zugangsöffnung (232, 260, 260a, 260b, 260c) gegenüber angeordnet ist und ein Zieltier in einer ersten Winkelrichtung entlang des Durchgangs lenkt, wobei das zweite Ablenk- bzw. Sperrelement (275) das Zieltier entlang des Durchgangs in eine zweite, zur ersten winklige Richtung lenkt.

6. Tierfalle nach Anspruch 3, bei der das erste und das zweite Ablenk- bzw. Sperrelement (270, 275, 280, 280b, 280c, 282) einen freien Randbereich (274, 278, 280', 280b', 282') aufweisen, den ein Zieltier umrunden muss, wobei der freie Randbereich (274, 278, 280', 280b', 282.') des ersten und zweiten Ablenk- bzw. Sperrelements (270, 275, 280, 280b, 280c, 282) auf gegenüberliegenden Seiten einer Gerade liegen, die von der Zugangsöffnung (32, 132, 260, 260a, 260b, 260c) zu mindestens der zweiten Elektrode (252, 252b, 252c) verläuft.

7. Tierfalle nach Anspruch 6, bei der das erste und das zweite Ablenk- bzw. Sperrelement (270, 275, 280, 280b, 280c, 282) sich bei geschlossener Abdeckung (127, 230, 230a, 230b, 230c) über im wesentlichen die volle Höhe der Kammer zwischen dem Boden des Gehäuses (122, 220, 225, 225a, 225b) und der Abdeckung (127, 230, 230a, 230b, 230c) erstrecken.

8. Tierfalle nach Anspruch 6, bei der der Durchgang von beabstandeten Wandflächen (226, 235) des Gehäuses (122, 220, 225, 225a, 225b) umgrenzt ist, das erste Ablenk- bzw. Sperrelement (270) mit einem ersten Ende (272) an einer ersten Wandfläche (226) befestigt ist, die den Durchgang mit eingrenzt, und mit einem zweiten Ende (274), das freie Randbereiche aufweist, von einer zweiten Wandfläche (235) beabstandet ist, die den Durchgang mit eingrenzt und sich unter einem ersten Winkel von seinem ersten Ende (272) zum zweiten Ende (274) erstreckt, bei der weiterhin das zweite Ablenk- bzw. Sperrelement (275) mit einem ersten Ende (276) an der zweiten Wandfläche (235) und mit einem zweiten Ende (278), das die freien Randbereiche aufweist, von der ersten Wandfläche (226) beabstandet ist und sich unter einem zweiten Winkel von seinem ersten Ende (276) zum zweiten Ende (278) erstreckt, und bei der das zweite Ende (274) des ersten Ablenk- bzw. Sperrelements (270) und das zweite Ende (278) des zweiten Ablenk- und Sperrelements (275) sich jeweils an einem in Längsrichtung mittig liegenden Punkt des Durchgangs vorbei erstrecken, um den direkten Zugang von der Zugangsöffnung (132, 260, 260a, 260b, 260c) zu mindestens der zweiten Elektrode (252, 252b, 252c) zu versperren.

9. Tierfalle nach Anspruch 8, bei der das erste Ablenk- bzw. Sperrelement (270) unter einem Winkel von etwa 45° relativ zu ersten Wandfläche (226) und das zweite Ablenk- bzw. Sperrelement (275) unter einem entgegen gesetzten Winkel von etwa 45° relativ zur zweiten Wandfläche (235) liegen.

10. Tierfalle nach Anspruch 1, bei der das zweite Ablenk- bzw. Sperrelement (280b) sich zwischen den beabstandeten Elektroden abwärts in die Kammer erstreckt und das zweite Ablenk- bzw. Sperrelement (280, 280b, 280c) einen unteren Randbereich (280b') aufweist, der von der Bodenfläche des Fußes (124, 225, 225a, 225b) um eine Strecke beabstandet ist, die ein Zieltier zwingt, sich beim Annähern an die zweite Elektrode (252, 252b, 252c) unter dem zweiten Ablenk- bzw. Sperrelement (280, 280b, 280c) hindurch zu zwängen.

11. Tierfalle nach Anspruch 1, bei dem das zweite Ablenk- bzw. Sperrelement (280, 280b, 280c) von der Abdeckung (230, 230a, 230b, 230c) getragen wird.

12. Tierfalle nach Anspruch 11, bei der die Abdeckung (230, 230a, 230b, 230c) öffenbar ist und bei geschlossener Abdeckung (230, 230a, 230b, 230c) das zweite Ablenk- bzw. Sperrelement (280, 280b, 280c) sich abwärts in die Kammer erstreckt.

13. Tierfalle nach Anspruch 1, bei der das zweite Ablenk- bzw. Sperrelement (282) zwischen der Zugangsöffnung (132, 260, 260a, 260b, 260c) und dem ersten Ablenk- bzw. Sperrelement (280) und von letzterem beabstandet sich aufwärts erstreckt und das zweite Ablenk- bzw. Sperrelement (282) mit einem oberen Randbereich (282') von der Bodenfläche eine Strecke beabstandet ist, die größer ist als der Abstand des unteren Randbereichs (280b') des ersten Ablenk- bzw. Sperrelements (280) von der Bodenfläche, wobei das erste und das zweite Ablenk- bzw. Sperrelement (280, 282) gemeinsam einem durch die Zugangsöffnung (132, 260, 260a, 260b, 260c) eingeführten gradlinigen Gegenstand den Zugang zu den Elektroden versperren.

14. Tierfalle nach Anspruch 10 weiterhin mit einer Schrägflächenfalle (300), die in den Durchgang eingefügt ist und aufweist: ein Plattformelement (302) mit einem ersten Endteil (304) der Zugangsöffnung (132, 260, 260a, 260b, 260c) gegenüber und einem zweiten Endteil (306) der zweiten Elektrode (252, 252b, 252c) gegenüber; ein Schwenkelement (nicht gezeigt) unter dem Plattformelement (302), das letzteres zwischen seinen Endbereichen (304, 306) zwischen einer ersten Lage, in der der erste Endbereich (304) abgesenkt und der zweite Endbereich (306) angehoben ist, und einer zweiten Lage kippbar lagert, in der der erste Endbereich (304) angehoben und der zweite Endbereich (306) abgesenkt ist; ein Türelement (308), das untere Randbereiche (308') und einen oberen Rand aufweist; und ein Scharnierelement, das an den unteren Randbereichen (308') des Türelements (308) nahe der Zugangsöffnung (132, 260, 260a, 260b, 260c) befestigt ist zwecks Schwenkbewegung des Türelements (308) zwischen einer abgesenkten Lage, in der das Türelement auf dem ersten Endbereich (304) des Plattformelements (302) aufliegt, wenn letzteres seine erste Position einnimmt, in der ein Zieltier durch die Zugangsöffnung (132, 260, 260a, 260b, 260c) den Durchgang erreichen kann, und einer angehobenen Lage, in der das Türelement (308) durch die Bewegung des ersten Endbereichs (304) des Plattformelements (302) bei der Bewegung des letzteren aus seiner ersten in seine zweite Position angehoben wird; wobei das Türelement (308) in seine abgesenkte Lage vorbeaufschlagt ist, das Gewicht des Türelements (308) auf dem ersten Endteil (304) des Plattformelements (302) bei in der abgesenkten Lage befindlichen Türelement (308) das Plattformelement (302) in seiner ersten Lage hält und das Gewicht des Zieltiers auf dem zweiten Endbereich (306) des Plattformelements (302) dieses in seine zweite Lage kippt, wenn das Zieltier von der Zugangsöffnung (132, 260, 260a, 260b, 260c) kommend am Schwenkelement vorbei läuft und dabei das Türelement (308) in die angehobene Lage hebt, wobei weiterhin das Türelement (308) in seiner angehobenen Lage einem Zieltier auf dem Plattformelement (302) die Rückkehr zur Zugangsöffnung (132, 260, 260a, 260b, 260c) versperrt, das Plattformelement (302) unter elektrischer Spannung steht und die erste Elektrode bildet, ein Isolator (310) unter dem zweiten Endbereich (306) des Plattformelements (302) liegt, das Zieltier einen elektrischen Schlag nur dann erhält, wenn es die beiden Elektroden gleichzeitig berührt, und schließlich das Plattformelement (302) in beiden Lagen das gleichzeitige Berühren beider Elektroden durch einen durch die Zugangsöffnung (132, 260, 260a, 260b, 260c) eingeführten gradlinigen Gegenstand verhindert.

## Revendications

1. Piège pour animaux comportant un logement comprenant une base dotée d'un fond et de parois latérales et définissant une chambre intérieure et un couvercle destiné à ladite chambre,
une ouverture d'entrée communiquant avec ladite chambre,
un passage conduisant depuis ladite ouverture d'entrée le long de l'intérieur dudit logement,
des première et deuxième électrodes espacées l'une de l'autre interposées dans ledit passage et un circuit électriquement connecté auxdites électrodes pour amorcer un choc électrique lorsque lesdites électrodes sont simultanément touchées par un animal cible,
**caractérisé en ce qu'**au moins un premier élément formant chicane ou barrière (270, 280, 280b, 280c) est interposé dans ledit passage à un emplacement intermédiaire entre ladite ouverture d'entrée (132, 260, 260a, 260b, 260c) et au moins ladite deuxième électrode (252, 252b, 252c) afin de décourager un animal cible qui s'approche de ladite deuxième électrode (252, 252b, 252c) d'inverser sa direction, et qu'au moins un deuxième élément formant chicane ou barrière (275, 282) bloque le contact simultané avec les deux dites électrodes au moyen d'un élément rectiligne passant à travers ladite ouverture d'entrée (132, 260, 260a, 260b, 260c).

2. Piège pour animaux selon la revendication 1 comprenant en outre un emplacement de réception d'appât (265) à une extrémité dudit passage, situé à distance de ladite ouverture d'entrée (132, 260, 260a, 260b, 260c).

3. Piège pour animaux selon la revendication 2 comprenant en outre des ouvertures (226', 226b', 230a', 260', 260b') pratiquées dans des parties dudit logement (122, 220, 225, 225a, 225b) destinées à permettre à l'odeur de l'appât de se répandre dans l'atmosphère depuis ledit emplacement de réception d'appât (265).

4. Piège pour animaux selon la revendication 1, dans lequel lesdits premier et deuxième éléments formant chicanes ou barrières (270, 275, 280, 280b, 280c, 282) sont interposés dans ledit passage avec un espace entre eux à un emplacement intermédiaire entre ladite ouverture d'entrée (132, 260, 260a, 260b, 260c) et au moins ladite deuxième électrode (252, 252b, 252c), lesdits premier et deuxième éléments formant chicanes ou barrières (270, 275, 280, 280b, 280c, 282) bloquant ensemble l'accès visuel à ladite ouverture d'entrée (132, 260, 260a, 260b, 260c) pour un animal qui y passe afin de décourager l'animal cible de s'engager dans la direction inverse.

5. Piège pour animaux selon la revendication 4, dans lequel ledit premier élément formant chicane ou barrière (270) est juxtaposé à ladite ouverture d'entrée (132, 260, 260a, 260b, 260c) et dirige un animal cible dans une première direction formant un angle le long dudit passage, et ledit deuxième élément formant chicane ou barrière (275) dirige à nouveau l'animal cible dans une deuxième direction formant un angle par rapport à ladite première direction le long dudit passage.

6. Piège pour animaux selon la revendication 5, dans lequel chacun desdits premier et deuxième éléments formant chicanes ou barrières (270, 275, 280, 280b, 280c, 282) comprend une partie à bord libre (274, 278, 280', 280b', 282') autour de laquelle un animal cible doit passer, et lesdites parties à bord libre (274, 278, 280', 280b', 282') desdits premier et deuxième éléments formant chicanes ou barrières (270, 275, 280, 280b, 280c, 282) sont situés sur des côtés opposés de n'importe quelle ligne droite allant de ladite ouverture d'entrée (32, 132, 260, 260a, 260b, 260c) à au moins ladite deuxième électrode (252, 252b, 252c).

7. Piège pour animaux selon la revendication 6, dans lequel lesdits premier et deuxième éléments formant chicanes ou barrières (270, 275, 280, 280b, 280c, 282) s'étendent sur substantiellement toue la hauteur de ladite chambre entre ledit fond dudit logement (122, 220, 225, 225a, 225b) et ledit couvercle (127, 230, 230a, 230b, 230c) lorsque ledit couvercle (127, 230, 230a, 230b, 230c) est fermé.

8. Piège pour animaux selon la revendication 6, dans lequel ledit passage est défini par des parois espacées entre elles (226, 235) dudit logement (122, 220, 225, 225a, 225b), ledit premier élément formant chicane ou barrière (270) ayant une première extrémité (272) fixée à une première paroi (226) définissant ledit passage et une deuxième extrémité (274) comprenant lesdites parties à bord libre espacée d'une deuxième paroi (235) définissant ledit passage et s'étendant en formant un premier angle depuis sa première extrémité (272) jusqu'à sa deuxième extrémité (274), ledit deuxième élément formant chicane ou barrière (275) ayant une première extrémité (276) fixée à ladite deuxième paroi (235) et une deuxième extrémité (278) comprenant lesdites parties à bord libre espacées de ladite première paroi (226) et s'étendant en formant un deuxième angle depuis sa première extrémité (276) jusqu'à sa deuxième extrémité (278), ladite deuxième extrémité (274) dudit premier élément formant chicane ou barrière (270) et ladite deuxième extrémité (278) dudit deuxième élément formant chicane ou barrière (275) s'étendant chacune au-delà d'un point médian dans le sens longitudinal dudit passage afin de bloquer l'accès direct depuis ladite ouverture d'entrée (132, 260, 260a, 260b, 260c) jusqu'à au moins ladite deuxième électrode (252, 252b, 252c).

9. Piège pour animaux selon la revendication 8, dans lequel ledit premier élément formant chicane ou barrière (270) s'étend avec un angle d'approximativement 45° par rapport à ladite première paroi (226) et dans lequel ledit deuxième élément formant chicane ou barrière (275) s'étend avec un angle opposé d'approximativement 45° par rapport à la deuxième paroi (235).

10. Piège pour animaux selon la revendication 1, dans lequel ledit deuxième élément formant chicane ou barrière (280b) s'étend vers le bas dans ladite chambre à un emplacement intermédiaire entre lesdites électrodes espacées, ledit deuxième élément formant chicane ou barrière (280, 280b, 280c) ayant une partie bord inférieur (280b') espacée dudit fond de ladite base (124, 225, 225a, 225b) d'une distance qui force un animal cible à s'écraser pour passer sous ledit deuxième élément formant chicane ou barrière (280, 280b, 280c) lorsqu'il approche de ladite deuxième électrode (252, 252b, 252c).

11. Piège pour animaux selon la revendication 1, dans lequel ledit deuxième élément formant chicane ou barrière (280, 280b, 280c) est porté par ledit couvercle (230, 230a, 230b, 230c).

12. Piège pour animaux selon la revendication 11, dans lequel ledit couvercle (230, 230a, 230b, 230c) peut être ouvert, et dans lequel ledit deuxième élément formant chicane ou barrière (280, 280b, 280c) s'étend vers le bas dans ladite chambre lorsque ledit couvercle (230, 230a, 230b, 230c) est fermé.

13. Piège pour animaux selon la revendication 1, dans lequel ledit deuxième élément formant chicane ou barrière (282) s'étend vers le haut entre ladite ouverture d'entrée (132, 260, 260a, 260b, 260c) et ledit premier élément formant chicane ou barrière (280) et est à l'écart de celui-ci, ledit deuxième élément formant chicane ou barrière (282) ayant une partie bord supérieur (282') espacée dudit fond d'une distance supérieure à ladite distance de ladite partie bord inférieur (280b') dudit premier élément formant chicane ou barrière (280) par rapport audit fond, grâce à quoi lesdits premier et deuxième éléments formant chicanes ou barrières (280, 282) bloquent ensemble l'accès auxdites électrodes au moyen d'un élément rectiligne passant à travers ladite ouverture d'entrée (132, 260, 260a, 260b, 260c).

14. Piège pour animaux (10) comprenant en outre un ensemble de piège (300) formant un plan incliné interposé dans ledit passage et comportant un élément formant plate-forme (302) ayant une première partie d'extrémité (304) juxtaposée à ladite ouverture d'entrée (132, 260, 260a, 260b, 260c) et une deuxième partie d'extrémité (306) juxtaposée à ladite deuxième électrode (252, 252b, 252c), un élément formant pivot (non représenté) situé sous et supportant ledit élément formant plate-forme (302) à un emplacement intermédiaire entre ses parties d'extrémité (304, 306) en vue d'effectuer un mouvement de basculement dudit élément formant plate-forme (302) entre une première position dans laquelle ladite première partie d'extrémité (304) est abaissée et ladite deuxième partie d'extrémité (306) est soulevée, et une deuxième position dans laquelle ladite première partie d'extrémité (304) est soulevée et ladite deuxième partie d'extrémité (306) est abaissée, et un élément formant porte (308) comportant des parties (308') de bord inférieur et un bord supérieur, un élément d'articulation fixé auxdites parties (308') dudit élément formant porte (308) adjacent à ladite ouverture d'entrée (132, 260, 260a, 260b, 260c) destiné au pivotement dudit élément formant porte (308) entre une position abaissée dans laquelle ledit élément formant porte repose sur la première partie d'extrémité (304) dudit élément formant plate-forme (302) lorsque l'élément formant plate-forme (302) est dans sa première position abaissée en vue de donner accès au passage à un animal cible, par ladite ouverture d'entrée (132, 260, 260a, 260b, 260c), et une position soulevée dans laquelle ledit élément formant porte (308) est soulevée par le mouvement de ladite première partie d'extrémité (304) dudit élément formant plate-forme (302) lorsque ledit élément formant plate-forme (302) est déplacé de sa première position à sa deuxième position, ledit élément formant porte (308) étant poussé en direction de sa position abaissée, le poids dudit élément formant porte (308) portant sur ladite première partie d'extrémité (304) dudit élément formant plate-forme (302) lorsque ledit élément formant porte (308) lorsque ledit élément formant porte (308) est dans sa position abaissée, maintenant ledit élément formant plate-forme (302) dans sa première positon, et le poids de l'animal cible portant sur la deuxième partie d'extrémité (306) dudit élément formant plate-forme (302) faisant basculer ledit élément formant plate-forme (302) jusqu'à sa deuxième positon lorsque l'animal cible passe de ladite ouverture d'entrée (132, 260, 260a, 260b, 260c) au-delà dudit élément formant pivot en soulevant de ce fait ledit élément formant porte (308) jusqu'à sa positon soulevée, ledit élément formant porte (308), en position soulevée, bloquant le retour à ladite ouverture d'entrée (132, 260, 260a, 260b, 260c) pour un animal cible qui se trouve sur ledit élément formant plate-forme (302), ledit élément formant plate-forme (302) étant électrifié et définissant ladite première électrode, un isolant (310) étant disposé sous ladite deuxième partie d'extrémité (306) dudit élément formant plate-forme (302), grâce à quoi l'animal cible ne subit un choc que lorsqu'il entre en contact simultanément avec lesdites deux électrodes et ledit élément formant plate-forme (302), dans l'une ou l'autre de ses positions bloquant simultanément le contact avec les deux dites électrodes au moyen d'un élément rectiligne passant à travers ladite ouverture d'entrée (132, 260, 260a, 260b, 260c).
